# NEUE EUROPÄISCHE PATENTSCHRIFT

(11) **EP 1 157 771 B2**
(45) Veröffentlichungstag und Bekanntmachung des Hinweises auf die Entscheidung über den Einspruch: **18.08.2010**
(45) Hinweis auf die Patenterteilung: 02.06.2004
(21) Anmeldenummer: 01107522.3
(22) Anmeldetag: 26.03.2001
(51) Int. Cl.: B23K 1/015

(54) **Dampfphasenlötanlage mit überhitztem Dampf**
Apparatus for vapour phase soldering with superheated vapour
Appareil pour brasage en phase vapeur travaillant avec de la vapeur surchauffée

(30) Priorität: 23.05.2000 DE 10025472
(43) Veröffentlichungstag der Anmeldung: 28.11.2001
(73) Patentinhaber: rehm Anlagenbau GmbH, 89143 Blaubeuren-Seissen (DE)
(72) Erfinder: Bell, Hans, Dr.rer. nat., 13187 Berlin (DE)
(74) Vertreter: Grünecker, Kinkeldey, Stockmair & Schwanhäusser Anwaltssozietät

(56) Entgegenhaltungen:
- WO-A-98/41352
- DE-A- 4 126 597
- DE-T2- 3 873 321
- FR-A- 2 499 228
- GB-A- 2 190 867
- US-A- 4 612 712
- US-A- 5 573 688

## Beschreibung

Die vorliegende Erfindung betrifft eine Dampfphasenlötanlage gemäß dem Oberbegriff des Anspruchs 1 und ein Verfahren gemäß dem Oberbegriff des Anspruch 5, wie zum Beispiel aus der Fr 2499228 bekannt.

Bekanntermaßen wird beim Dampfphasenlöten beim Kondensieren einer gesättigten Dampfphase auf der Oberfläche eines zu verlötenden Bauteiles Energie in Form von Wärme frei, wodurch das Lot zum Schmelzen gebracht und somit die Verbindung des Bauteils zur Leiterbahn hergestellt wird. Die gesättigte Dampfphase wird durch eine siedende Primärflüssigkeit erzeugt, wobei durch den Siedepunkt der Primärflüssigkeit die Prozesstemperatur beim Lötvorgang vorgegeben ist. Obwohl sich das Lötverfahren mit gesättigtem Dampf durch eine genau definierte Löttemperatur mit einer gleichmäßigen Erwärmung des zu verlötenden Bauteils auszeichnet und damit besonders zur Verarbeitung von Bauteilen stark unterschledlicher Wärmekapazität geeignet ist, zeigt dieses Verfahren dennoch eine gewisse Beschränkung dahingehend, dass die Löttemperatur nicht in einfacher Welse frei wählbar ist, da diese eben durch den Siedepunkt der Primärflussigkeit vorgegeben ist.

Eine Verbesserung in dieser Hinsicht wird durch Anlagen ereicht, in denen der Dampf nicht mehr in direkter Wechselwirkung mit seiner flüssigen Phase steht. Es werden dabei kleine Mengen der Primärflüssigkeit im Lötraum der Anlage vollständig verdampft, wodurch sehr schnell benötigte Mengen an Dampf nach produziert werden können und somit auch in gewissen Grenzen die angebotene Wärmemenge gesteuert werden kann. Dennoch liegt auch diesem Prinzip zugrunde, dass stets die Siedetemperatur der Primarflüssigkeit eine obere Grenztemperatur bildet, wodurch elne evtl. gewünschte Temperaturprofilierung im gesamten Lötvorgang nur über die Verweilzeiten der zu lötenden Baugruppen im Dampf möglich ist. Die hat zur Folge, dass entweder der Durchsatz einer derartigen Anlage aufgrund der erhöhten Verweilzeit deutlich eingeschränkt ist, oder dass gewisse Baugruppen, die eine spezielle Art der Temperatur profilierung benötigen, unter Umständen gar nicht bearbeitet werden können.

Ferner wird im Stand der Technik, beispielsweise in der GB-2190867 und in der WO 9841352, auch von Dampfphasenlötanlagen berichtet, die überhitzten Dampf verwenden, um damit die Prozesstemperatur zu steuern. So ist beispielsweise aus der GB-2 190 867 ein Verfahren und eine Vorrichtung bekannt, in der mittels einer geeigneten Heizeinrichtung in der Lötzone überhitzter Dampf bereitgestellt wird, der in einer gewissen Höhe mittels Kühlelementen kondensiert und über einen Filter in ein Flüssigkeitsreservoir für die Primärflüssigkeit zurückgeführt wird. In dieser bekannten Anlage lässt sich allerdings kein kompliziertes Temperaturprofll bei gleichzeitig hohem Durchsatz einstellen.

Es ist daher eine Aufgabe der vorliegenden Erfindung, eine verbesserte Dampfphasenlötanlage und ein Verfahren zum Betreiben einer Dampfphasenlötanlage bereitzustellen, wobei ein benötigtes Temperaturprofil für den Lötvorgang bei gleichzeitig hohem Durchsatz an zu verlötenden Baugruppen eingestellt werden kann.

Diese Aufgabe wird durch die Dampfphasenlötanlage nach Anspruch 1 und dem Verfahren zum Betreiben einer Dampfphasenlötanlage nach Anspruch 5 gelöst.

Entsprechend der vorliegenden Erfindung wird mittels der Heizeinrichtung die Primärflüssigkeit In die Dampfphase überführt, was bei einem einstellbaren oder fest vorgegebenem Druck stattfinden kann, und anschließend mittels der Primärflüssigkeitsfluidteitungzu den verschiedenen Helzmodulen geleitet. In den Helzmodulen kann durch Steuerung der Heizleistung der Dampf auf eine frei wählbare Temperatur überhitzt werden. Der überhitzte Dampf kann dann mittels Düsen oder mittels Konvektion auf die zu bearbeitenden Baugruppen In den jeweiligen Zonen geleitet werden. Somit kann sowohl die Prozesszone, die beispielweise als Vorhelzzone oder zweite Lötzone dienen kann, als auch die Lötzone mit dem Dampf der gleichen Primärflüssigkeit betrieben werden. Dies minimiert die Betriebskosten einer derartigen Anlage, wobei gleichzeitig die Zonentemperaturen frei wählbar sind und eine Individuelle Einstellung des Lötprofils zulassen, wie es in den weitverbreiteten Konvektionsanlagen üblich ist. Die erfindungsgemäße Anlage ermöglicht es daher also, eine Individuelle Temperaturprofilierung des Reflow-LÖtvorgangs zu. erreichen, ohne dass der Durchsatz dieser Anlage primär von der Verwellzeit der zu prozessierenden Baugruppen in einer Kondensationszone abhängig ist.

In einer bevorzugten Weiterbildung der vorliegenden Erfindung umfasst die Primärflüssigkeitsfluidleitung jeweils steuerbare Ventilelemente, so dass die Menge an Dampf steuerbar in das Lötzonenhelzmodul und das Prozesszonenheizmodul einleitbar ist.

Durch diese Ausführungsform ist es möglich, zusätzlich zur Temperatur des in den jeweiligen Helzmodulen erzeugten überhitzten Dampfes auch die Menge des überhitzten Dampfes zu regeln, um dadurch den Bedarf an überhitztem Dampf für unterschiedliche Baugruppen in der Lötzone bzw. der Prozesszone individuell zu decken. Dies führt zu einer weiteren Verkürzung der Verwelldauer, da es beispielsweise bei Baugruppen, die Bauteile mit relativ hoher Wärmekapazität aufweisen, durch Vergrößerung der zugeführten überhitzten Dampfmenge es möglich ist, die pro Zeiteinheit zu übertragende Wärmemenge zu steigem.

In einer weiteren bevorzugten Ausführungsform umfasst die Dampfphasenlötanlage jeweils eine Fluidverbindung zur Ausleitung von Primärflüssigkeit bzw deren Dampf, so dass die ausgeleitete Primärfüssigkeit bzw deren Dampf in das Primärflüssigkeitsreservoir und/oder in das Heizelement zur weiteren Dampferzeugung zurückführbar ist.

Da die erfindungsgemäße Dampfphasenlötanlage mit nur einer Primärflüssigkeit betreibbar ist, kann die in der Prozesszone bzw. der Lötzone auskondensierte Primärflüssigkeit in einer gemeinsamen Leitung zum Primärflüssigkeitsreservoir oder zu dem als, Dampferzeuger fungierenden Heizelement zurückgeführt werden. Vorteilhafter Weise wird dabei ein entsprechendes Filterelement in dieser Fluidverbindung vorgesehen, um die zurückgeführte kondensierte Primärflüssigkeit zu reinigen.

In einer weiteren Ausführungsform der vorliegenden Erfindung ist mindestens eine zweite Prozesszone vorgesehen, wobei die Prozesszone als Vorheizzone und die zweite Prozesszone als Kühlzone dient und die zweite Prozesszone in Fluidverbindung mit einem zweiten Prozesszonenheizmodul steht, in das über die Primärflüssigkeitsfluidleitung Dampf einleitbar ist.

Durch das Bereitstellen mindestens einer zweiten Prozesszone, die wiederum über ein zugeordnetes Heizzonenmodul verfügt, lassen sich komplexere Heizprofile für den Lötvorgang erreichen. So ist beispielsweise durch die Bereitstellung von zwei Prozesszonen mit jeweils zugeordneten Prozesszonenheizmodulen, die als Vorheizzonen dienen, einer Lötzone und einer weiteren Prozesszone, die als Kühlzone dient, eine individuelle Temperaturprofilierung innerhalb eines weiten Bereichs möglich. Ferner ist es auch denkbar, dass in Kombination zur Prozesszone, der zweiten Prozesszone und der Lötzone weitere Prozesszonen vorgesehen werden, die nicht mittels überhitztem Dampf betreibbar sind, sondern herkömmliche Konvektions- und/oder Infrarotheizmodule aufweisen.

Entsprechend einem weiteren Gesichtspunkt betrifft die vorliegende Erfindung ein Verfahren zum Betreiben einer Dampfphasenlötanlage, wobei mittels eines Heizelementes eine Primärflüssigkeit verdampft wird, wobei sich das Verfahren dadurch auszeichnet, dass in einem mit einer Lötzone in Fluidverbindung stehenden Lötzonenheizmodul und in einem mit einer Prozesszone in Fluidverbindungstehenden Prozesszonenheizmodul der Dampf der Primärflüssigkeit zonenweise und regelbar überhitzt wird.

In einer weiteren bevorzugten Ausführungform wird die Temperatur in der Prozesszone und der Lötzone durch Steuerung der Menge des eingeleiteten überhitzten Dampfes und/oder der Temperatur des überhitzten Dampfes eingestellt.

Die Vorteile des erfindungsgemäßen Verfahrens wurden bereits im Zusammenhang mit den Ausführungsformen der erfindungsgemäßen Vorrichtung aufgeführt.

Die vorliegende Erfindung wird nun anhand der folgenden Zeichnungsbeschreibung mittels eines detaillierten Beispiels beschrieben.

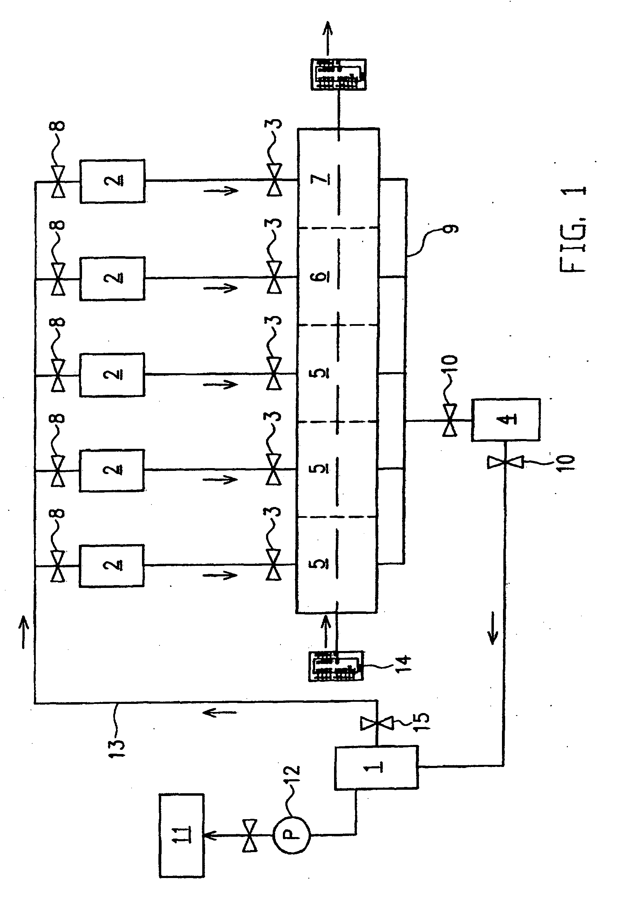

In der Figur ist mit der Bezugsziffer 11 ein Reservoir für eine Primärflüssigkeit bezeichnet. Dabei können die bereits bekannten und bei den konventionellen Dampfphasenlötanlagen verwendeten Medien (z.B. Galden) als Primärflüssigkeit verwendet werden. Ferner ist es in der erfindungsgemäßen Dampfphesenlötanlage möglich, auch Wasser als Primärflüssigkeit zu verwenden. Das Reservoir 11 ist über eine Pumpe 12 und eine Zuleitung mit einem Heizelement 1, das als Dampferzeuger dient, verbunden.

Das Heizelement 1 Ist über ein Absperrventil 15 mit einer Primärflussigkeitsfluidleitung 13 verbunden, die ihrerseits mit mehreren Helzmodulen 2 in Verbindung steht In dieser Ausführungsform sind jeweils drei Heizmodule 2 drei Prozesszonen, die als Vorheizzonen 5 dienen, zugeordnet Ein weiteres Heizmodul 2 ist einer Lötzone 6 und ein fünftes Heizmodul 2 ist einer Kühlzone 7 zugeordnet. An der Eingangsseite eines jeden Heizmoduls ist ein Ventilelement 8 vorgesehen, das vorzugsweise als regelbares Ventil ausgelegt ist, um die Menge des Dampfes, der in das entsprechende Heizmodut eingeleitet wird, entsprechend den Gegebenheiten beim Lötvorgang, d.h. entsprechend der benötigten Temperatur, etc. wählen zu können. In den Heizmodulen 2 sind entsprechende, in der Figur nicht dargestellte Heizeinrichtungen vorgesehen, deren Heizleistung steuerbar ist, so dass der in das jeweilige Heizmodul eingeleitete Dampf für jede der Zonen 5, 6 und 7 individuell überhitzbar ist. Die Heizeinrichtungen sind vorzugsweise so ausgebildet, dass selbst bei benötigten größeren Dampfmengen eine ausreichende Heiziei-verfügbar ist, um eine Überhitzung auf eine notwendige Prozesstemperatur zu ermöglichen. Zwischen den Heizmodulen 2 und den jeweiligen zugeordneten Prozesszonen 5, 6 und 7 sind jeweils Einlassventile 3 vorgesehen. Ferner sind die Prozesszonen 5, 6 und 7 mittels einer Sammelleitung 9 über ein Ventil 10 mit einem Filter 4 verbunden, der seinerseits über ein weiteres Ventil 10 mit dem Heizelement 1 in Verbindung steht.

Im Betrieb wird mittels der Pumpe 12 Primärflüssigkeit in das Heizelement gefördert und dort in die Dampfphase überführt. Die Dampferzeugung im Heizelement 1 kann dabei bei einem einstellbaren oder auch fest vorgegebenen Druck stattfinden. Der auf die geeignete Temperatur überhitzte Dampf wird über eine Fluidverbindung in die entsprechende Prozesszone bzw. Lötzone geleitet. Dort wird er mittels Konvektion oder mittels Düsen, die zum Beispiel als Lochblechfelder oder Düsenstöcke in den Modulen vorgesehen sind, auf die Baugruppen übertragen. Eine zu verlötende Baugruppe 14 wird, wenn in der Anlage das für den Lötvorgang benötigte Temperaturprofil eingestellt ist, d.h., wenn die einzelnen Vorheizzonen 5, die Lötzone 6 und die Kühlzone 7 ihre geforderte Betriebstemperatur erreicht haben, in die erste der Vorheizzonen 5 eingeführt. Der überhitzte Dampf, der in den einzelnen Prozess- bzw. Lötzonen Wärmeenergie, vorwiegend in Form kinetischer Energie, mit der zu bearbeitenden Baugruppe ausgetauscht hat, kondensiert in einigen Prozesszonen teilweise aus und wird mittels der Sammelleitung 9 über das Ventilelement 10 in den Filter 4 geleitet Vom Filter 4 wird die gereinigte Primärflüssigkeit wieder in das Heizelement 1 bzw. den Dampferzeuger zurückgeführt.

Für die Steuerung des gesamten Lötvorgangs ist eine in der Figur nicht dargestellte elektronische Steuerung, beispielsweise in Form eines Mikroprozessors oder eines PCs vorgesehen. Hierzu werden ständig mittels geeignet angebrachter Sensoren die Temperaturen der einzelnen Prozess- bzw. Lötzonen überwacht und die entsprechenden Heizmodule sowie die Regelventile 8 so angesteuert, dass die Temperaturen in den einzelnen Zonen entsprechend dem vorgegebenen Lötprofit eingehalten werden.

Wie eingangs bereits erwähnt, kann das Heizelement 1 bzw. der Dampferzeuger auch in modularer Form als Teilelement in einem oder mehreren oder allen Heizmodulen 2 vorgesehen sein. Ferner müssen nicht notwendiger Weise alle Prozesszonen mit. entsprechenden Heizmodulen verknüpft sein. So könnten beispielsweise zwei der Vorheizzonen 5 aus einem gemeinsamen Heizmodut, jeweils über ein steuerbares Ventil bzw. Düse mit überhitztem Dampf versorgt werden. Ferner können die einzelnen Prozess- bzw. Lötzonen zusätzlich weitere Heizeinrichtungen, beispielsweise eine Strahlungsheizung oder eine Konvektionsheizung oder eine Kombination davon, umfassen.

Ferner ist es auch möglich, dass die Lötzone in zwei oder mehrere Zonen unterteilt ist, indem beispielsweise getrennt regelbare Heizelemente in der Lötzone vorhanden sind.

## Patentansprüche

1. Dampfphasenlötanlage mit mindestens einer Lötzone (6) und einer Prozesszone (5,7), einem Primärflüssigkeitsreservoir (11) zur Aufnahme einer Primärflüssigkeit, wobei die Dampfphasenlötanlage ferner eine Heizeinrichtung (1) umfasst, um die Primärflüssigkeit in die Dampfphase überzuführen,
**dadurch gekennzeichnet,**
**dass** die Heizeinrichtung (1) außerhalb der Löt- und Prozesszonen (5,7,6) angeordnet ist und durch eine Primärflüssigkeitsfluidleitung (13) mit einem Lötzonenheizmodul (2), das mit der Lötzone (6) in Fluidverbindung steht, und mit einem Prozesszonenheizmodul (2), das mit der Prozesszone (5, 7) in Fluidverbindung steht, verbunden ist, wobei mittels der Primärflüssigkeitsfluidleitung (13) Dampf der Primärflüssigkeit in das Lötzonenheizmodul (2) und das Prozesszonenheizmodul (2) einleitbar ist und, dass Steuermittel vorgesehen sind, um die Heizleistungen des Lötzonenheizmoduls (2) und des Prozesszonenheizmoduls (2) unabhängig voneinander einzustellen, um damit zonenbezogenen überhitzten Dampf zu erzeugen und die Temperatur des überhitzten Dampfs zonenbezogen zu steuern.

2. Die Dampfphasenlötanlage nach Anspruch 1, **dadurch gekennzeichnet, dass** die Primärflüssigkeitsfluidleitung (13) jeweils steuerbare Ventilelemente (8) aufweist, so dass in das Lötzonenheizmodul (2) und das Prozesszonenheizmodul (2) jeweils steuerbar die Menge an Dampf der Primärflüssigkeit einleitbar ist.

3. Die Dampfphasenlötanlage nach Anspruch 1 oder 2, **dadurch gekennzeichnet, dass** die Dampfphasenlötanlage jeweils eine Fluidverbindung (9) zur Ausleitung von Primärflüssigkeit umfasst, so dass die ausgeleitete Primärflüssigkeit aus der Prozesszone (5,7) und der Lötzone (6) in das Primärflüssigkeitsreservoir (11) und/oder das Heizelement (1) zurückführbar ist.

4. Die Dampfphasenlötanlage nach einem der Ansprüche 1 bis 3, **dadurch gekennzeichnet, dass** mindestens eine zweite Prozesszone vorgesehen ist, wobei die Prozesszone als Vorheizzone (5) und die zweite Prozesszone als Kühlzone (7) dient und die zweite Prozesszone in Fluidverbindung mit einem zweiten Prozesszonenheizmodul (2) steht, in das über die Primärflüssigkeitsfluidleitung (13) Dampf der Primärflüssigkeit einleitbar ist.

5. Verfahren zum Betreiben einer Dampfphasenlötanlage, wobei mittels einer Heizeinrichtung (1) Primärflüssigkeit verdampft wird, **dadurch gekennzeichnet, dass** der Dampf der Primärflüssigkeit über eine Primärflüssigkeitsfluidleitung (13) zonenweise in eine Prozesszone (5,7) und eine Lötzone (6) regelbar überhitzt eingeführt wird, und dass die Heizeinrichtung (1) außerhalb der Löt- und Prozesszone (5, 6, 7) angeordnet ist, wobei der Dampf der Primärflüssigkeit in einem mit der Lötzone in Fluidverbindung stehendem Lötzonenheizmodul und in einem mit der Prozesszone in Fluidverbindung stehendem Prozesszonen heizmodul zonenweise und regelbar überhitzt wird.

6. Verfahren nach Anspruch 5, **dadurch gekennzeichnet, dass** die Temperatur in der Prozesszone (5,7) und der Lötzone (6) durch Steuerung der Menge des eingeleiteten überhitzten Dampfes und/oder der Temperatur des überhitzten Dampfes eingestellt wird.

## Claims

1. A vapor phase reflow system comprising at least one soldering zone (6) and a process zone (5, 7), a primary liquid reservoir (11) containing a primary liquid, the vapor phase reflow system further comprising a heating means (1) for converting the primary liquid into the vapor phase,
**characterized in**
**that** the heating means (1) is arranged outside the soldering and process zones (5, 6, 7) and is connected through a primary-liquid fluid line (13) to a soldering-zone heating module (2) in fluid communication with the soldering zone (6), and to a process-zone heating module (2) in fluid communication with the process zone (5, 7), vapor of the primary liquid being introducible by means of the primary-liquid fluid line (13) into the soldering-zone heating module (2) and the process-zone heating module (2), and that
control means are provided for adjusting the heating power of the soldering-zone heating module (2) and of the process-zone heating module (2) independently of each other so as to generate superheated vapor based on the zones and to control the temperature of the superheated vapor based on the zones.

2. The vapor phase reflow system according to claim 1, **characterized in that** the primary-liquid fluid line (13) comprises respectively controllable valve elements (8), so that the amount of vapor of the primary liquid can be introduced, each in a controllable manner, into the soldering-zone heating module (2) and the process-zone heating module (2).

3. The vapor phase reflow system according to claim 1 or 2, **characterized in that** the vapor-phase reflow system comprises a respective fluid connection (9) for discharging primary liquid, so that the discharged primary liquid can be returned from the process zone (5, 7) and the soldering zone (6) into the primary liquid reservoir (11) and/or the heating element (1).

4. The vapor phase reflow system according to any one of claims 1 to 3, **characterized in that** at least one second process zone is provided, the process zone serving as a preheating zone (5) and the second process zone serving as a cooling zone (7), and the second process zone being in fluid communication with a second process-zone heating module (2) into which vapor of the primary liquid can be introduced via the primary-liquid fluid line (13).

5. A method for operating a vapor phase reflow system, with primary liquid being evaporated by a heating means (1), **characterized in that** the vapor of the primary liquid is introduced via a primary-liquid fluid line (13) zonewise into a process zone (5, 7) and a soldering zone (6) in an adjustably superheated manner, and that the heating means (1) is arranged outside the soldering and process zone (5, 6, 7), the vapor of the primary liquid being superheated zone by zone and in an adjustable manner in a soldering-zone heating module in fluid communication with the soldering zone and in a process-zone heating module in fluid communication with the process zone.

6. The method according to claim 5, **characterized in that** the temperature in the process zone (5, 6) and the soldering zone (6) is adjusted by controlling the amount of the introduced superheated vapor and/or the temperature of the superheated vapor.

## Revendications

1. Appareil pour brasage en phase vapeur avec au moins une zone de brasage (6) et une zone de traitement (5, 7), un réservoir de liquide primaire (11) pour l'admission d'un liquide primaire, l'appareil pour brasage en phase vapeur comprenant en outre un dispositif de chauffage (1) pour conduire le liquide primaire dans la phase vapeur,
**caractérisé en ce que**
le dispositif de chauffage (1) est disposé à l'extérieur des zones de brasage et de traitement (5, 7, 6) et est raccordé via une conduite pour fluides de liquide primaire (13) à un module de chauffage pour zone de brasage (2), qui est relié via un raccordement pour fluides à la zone de brasage (6), et à un module de chauffage pour zone de traitement (2), qui est relié via un raccordement pour fluides à la zone de traitement (5, 7), sachant qu'au moyen de la conduite pour fluides de liquide primaire (13) de la vapeur de liquide primaire peut être introduite dans le module de chauffage pour zone de brasage (2) et le module de chauffage pour zone de traitement (2), et **en ce que**
des moyens de commande sont prévus, afin de régler la puissance calorifique du module de chauffage pour zone de brasage (2) et du module de chauffage pour zone de traitement (2) séparément, pour ainsi générer de la vapeur surchauffée par plages et contrôler la température de la vapeur surchauffée par plages.

2. Appareil pour brasage en phase vapeur selon la revendication 1, **caractérisé en ce que** la conduite pour fluides de liquide primaire (13) comprend respectivement des éléments de vannes (8) réglables, de sorte que dans le module de chauffage pour zone de brasage (2) et le module de chauffage pour zone de traitement (2) la quantité de vapeur du liquide primaire est apte à être introduite et réglée respectivement.

3. Appareil pour brasage en phase vapeur selon la revendication 1 ou 2, **caractérisé en ce que** l'appareil pour brasage en phase vapeur comprend respectivement un raccordement pour fluides (9) pour le rejet du liquide primaire, de telle manière que le liquide primaire rejeté est reconduit de la zone de traitement (5, 7) et de la zone de brasage (6) dans le réservoir de liquide primaire (11) et/ou dans le dispositif de chauffage (1).

4. Appareil de brasage en phase vapeur selon l'une des revendications 1 à 3, **caractérisé en ce qu'**au moins une seconde zone de traitement est prévue, sachant que la zone de traitement sert de zone de préchauffage (5) et la seconde zone de traitement de zone de refroidissement (7) et la seconde zone de traitement est reliée par un raccordement pour fluides à un second module de chauffage pour zone de traitement (2), dans lequel de la vapeur du liquide primaire peut être introduite au-dessus de la conduite pour fluides de liquide primaire (13).

5. Procédé pour l'utilisation d'un appareil pour brasage en phase vapeur, sachant que du liquide primaire est évaporé au moyen d'un dispositif de chauffage (1), **caractérisé en ce que** la vapeur du liquide primaire est introduite surchauffée au-dessus d'une conduite pour fluides de liquide primaire (13) progressivement dans une zone de traitement (5, 7) et dans une zone de brasage (6) de manière réglable et que le dispositif de chauffage (1) est placé à l'extérieur de la zone de brasage et de la zone de traitement (5, 6, 7), sachant que la vapeur du liquide primaire est progressivement surchauffée de manière réglable dans un module de chauffage pour zone de brasage relié par un raccordement pour fluides à la zone de brasage et dans un module de chauffage pour zone de traitement relié par un raccordement pour fluides à la zone de traitement.

6. Procédé selon la revendication 5, **caractérisé en ce que** la température dans la zone de traitement (5, 7) et la zone de brasage (6) est réglée grâce au contrôle de la quantité de vapeur surchauffée introduite et/ou de la température de la vapeur surchauffée.
